# EUROPEAN PATENT APPLICATION

(11) **EP 4 529 355 A1**
(43) Date of publication of application: **26.03.2025**
(21) Application number: 23901752.8
(22) Date of filing: 04.08.2023
(51) Int. Cl.: H05B 47/105, H05B 47/12, H05B 47/125, H05B 47/10

(54) **LIGHTING DEVICE ADJUSTMENT METHOD AND APPARATUS, AND LIGHTING DEVICE AND STORAGE MEDIUM**

(71) Applicant: Shenzhen Mango Science and Technology Innovation Co., Ltd., Shenzhen, Guangdong 518054 (CN)
(72) Inventor: WU, Ji, Shenzhen Guangdong 518054 (CN)
(74) Representative: Zaboliene, Reda
(86) International application number: PCT/CN2023/111337
(87) International publication number: WO 2025/030286

(57) **Abstract**

The present application provides a lighting device adjustment method, a device, a lighting device and a storage medium. The lighting device adjustment method includes: obtaining user expression information and/or user authorization information; inputting the user expression information and/or the user authorization information into a lighting instruction recommendation model, to obtain a target lighting instruction set corresponding to the user expression information and/or the user authorization information; receiving a selection instruction of a user and selecting a target lighting instruction from the target lighting instruction set according to the selection instruction of the user; adjusting the lighting device according to the target lighting instruction. The above method inputs the user expression information and/or the user authorization information into the lighting instruction recommendation model to obtain the target lighting instruction set to be recommended, and then responds to a selection instruction of a user for the target lighting instruction set to obtain a target lighting device and realize an adjustment of the lighting device, recommend personalized lighting effects to users.

## Description

### FIELD

The present application belongs to the field of lighting technology, and in particular relates to a lighting device adjustment method, a device, a lighting device and a storage medium.

### BACKGROUND

With a continuous development of the lighting technology, a healthy and energy-saving smart lighting has become a trend. For a lighting device, in order to adapt to different scene needs, the lighting device is usually set with a plurality of adjustable lighting modes, so that users can adjust the lighting mode of the lighting device according to a usage need to adapt to a corresponding scene need.

However, there may be tens of millions of types of lighting effects, and each user has their own preferred lighting effects. In related technologies, the lighting device is often controlled by analyzing factors such as a sound and a light in an external environment in which the lighting device is located, which cannot meet differentiated needs of different individual users, and thus cannot provide recommendations with personalized lighting effects to users.

### SUMMERY

Embodiments of the present application provide a lighting device adjustment method, a device, a lighting device, and a storage medium to solve the problem of being unable to recommend personalized lighting effects to users.

A first aspect of the embodiment of the present application provides a lighting device adjustment method, which is applied to a lighting device. The method includes: obtaining user expression information and/or user authorization information; inputting the user expression information and/or the user authorization information into a lighting instruction recommendation model to obtain a target lighting instruction set corresponding to the user expression information and/or the user authorization information; receiving a selection instruction of a user and selecting a target lighting instruction from the target lighting instruction set according to the selection instruction of the user; adjusting the lighting device according to the target lighting instruction.

Further, in the above method provided by the embodiment of the present application, the user expression information comprises at least one of a voice expression, a text expression, a facial expression, and a body expression; the user authorization information comprises at least one of user attribute information, information of a music, and information of a scene.

Further, in the above method provided by the embodiment of the present application, if the lighting instruction recommendation model comprises a lighting instruction recall model and a lighting instruction fine ranking model, then "inputting the user expression information and/or the user authorization information into a lighting instruction recommendation model to obtain a target lighting instruction set corresponding to the user expression information and/or the user authorization information" comprising: inputting the user expression information and/or the user authorization information into the lighting instruction recall model, to obtain first probability values of lighting instructions corresponding to the user expression information and/or the user authorization information, and selecting a plurality of lighting instructions whose first probability value greater than a preset probability threshold as an initial lighting instruction set; inputting the user expression information and/or the user authorization information, and the initial lighting instruction set into the lighting instruction fine ranking model, to obtain a second probability value of each initial lighting instruction in the initial lighting instruction set corresponding to the user expression information and/or the user authorization information, and ranking the initial lighting instruction set according to the second probability value to obtain the target lighting instruction set.

Further, in the above method provided by the embodiment of the present application, if the lighting instruction recommendation model comprises a lighting instruction recall model, a lighting instruction rough ranking model and a lighting instruction fine ranking model, then "inputting the user expression information and/or the user authorization information into a lighting instruction recommendation model to obtain a target lighting instruction set corresponding to the user expression information and/or the user authorization information" comprising: inputting the user expression information and/or the user authorization information into the lighting instruction recall model, to obtain first probability values of lighting instructions corresponding to the user expression information and/or the user authorization information, and selecting a plurality of lighting instructions whose first probability value greater that a preset probability threshold as an initial lighting instruction set; inputting the user expression information and/or the user authorization information, and the initial lighting instruction set into the lighting instruction rough ranking model, to obtain an intermediate probability value of each initial lighting instruction in the initial lighting instruction set corresponding to the user expression information and/or the user authorization information, and filtering and ranking the initial lighting instruction set according to the intermediate probability value to obtain an intermediate lighting instruction set; inputting the user expression information and/or the user authorization information, and the intermediate lighting instruction set into the lighting instruction fine ranking model, to obtain a second probability value of each intermediate lighting instruction in the intermediate lighting instruction set corresponding to the user expression information and/or the user authorization information, and ranking the intermediate lighting instruction set according to the second probability value to obtain the target lighting instruction set.

Further, in the above method provided by the embodiment of the present application, if the lighting instruction recommendation model comprises a lighting instruction fine ranking model, then "inputting the user expression information and/or the user authorization information into a lighting instruction recommendation model to obtain a target lighting instruction set corresponding to the user expression information and/or the user authorization information" comprising: determining a plurality of lighting instructions corresponding to the user expression information and/or the user authorization information as a preset lighting instruction set; inputting the user expression information and/or the user authorization information, and the preset lighting instruction set into the lighting instruction fine ranking model, to obtain a target probability value of each preset lighting instruction in the preset lighting instruction set corresponding to the user expression information and/or the user authorization information, and ranking the preset lighting instruction set according to the target probability value to obtain the target lighting instruction set; or inputting the user expression information and/or the user authorization information into the lighting instruction fine ranking model, to obtain a lighting instruction set corresponding to the user expression information and/or the user authorization information and a probability value of each lighting instruction in the lighting instruction set, and filtering and ranking the lighting instruction set according to the probability value to obtain the target lighting instruction set.

Further, in the above method provided by the embodiment of the present application, determining the plurality of lighting instructions corresponding to the user expression information and/or the user authorization information as the preset lighting instruction set, comprises: traversing a preset mapping relationship of user expression information and/or user authorization information corresponding to lighting instructions, and obtaining the preset lighting instruction set composed of the plurality of lighting instructions.

Further, in the above method provided by the embodiment of the present application, after obtaining the user expression information and/or the user authorization information, the method further comprise: determining user attribute information corresponding to the user authorization information; if a user is determined to be a target user according to the user attribute information, then invoking a lighting instruction determination model to process the user attribute information to obtain a target user group corresponding to the user attribute information and a target lighting instruction corresponding to the target user group; adjusting the lighting device according to the target lighting instruction.

A second aspect of the embodiment of the present application also provides a lighting device adjustment device. The device includes: a user information acquisition module, being used to obtain user expression information and/or user authorization information; a lighting instruction recommendation module, being used to input the user expression information and/or the user authorization information into a lighting instruction recommendation model to obtain a target lighting instruction set corresponding to the user expression information and/or the user authorization information; a lighting instruction selection module, being used to receive a selection instruction of a user and select a target lighting instruction from the target lighting instruction set according to the selection instruction of the user; a lighting device adjustment module, being used to adjust the lighting device according to the target lighting instruction.

A third aspect of the embodiment of the present application also provides a lighting device. The lighting device includes a processor and a storage device. The processor is used to implement any one of the above lighting device adjustment methods when executing a computer program stored in the storage device.

A fourth aspect of the embodiment of the present application also provides a computer-readable storage medium, where a computer program is stored on the computer-readable storage medium. When the computer program is executed by a processor, any one of the lighting device adjustment methods described above is implemented.

The lighting device adjustment method provided by the embodiment of the present application obtains user expression information and/or user authorization information; and inputs the user expression information and/or the user authorization information into the lighting instruction recommendation model to obtain the target lighting instruction set corresponding to the user expression information and/or user authorization information; then, receiving the selection instruction of the user and selecting the target lighting instruction from the target lighting instruction set according to the selection instruction of the user, and adjusting the lighting device according to the target lighting instruction. The embodiment of the present application inputs the user expression information and/or the user authorization information into the lighting instruction recommendation model to obtain the target lighting instruction set to be recommended, and then responds to the selection instruction of the user for the target lighting instruction set to obtain a target lighting device and realize adjusting the lighting device, and recommending personalized lighting effects to users.

### BRIEF DESCRIPTION OF THE DRAWINGS

FIG. 1 is an application scene diagram of a lighting device adjustment method provided by an embodiment of the present application.
FIG. 2 is a flow chart of the lighting device adjustment method provided by an embodiment of the present application.
FIG. 3 is a flow chart for determining a target lighting instruction set provided by an embodiment of the present application.
FIG. 4 is a flow chart of determining the target lighting instruction set provided by another embodiment of the present application.
FIG. 5 is a flow chart of determining the target lighting instruction set provided by yet another embodiment of the present application.
FIG. 6 is a flow chart of switching target lighting instructions provided by an embodiment of the present application.
FIG. 7 is a schematic structural diagram of a lighting device adjustment device provided by an embodiment of the present application.
FIG. 8 is a schematic structural diagram of a lighting device provided by an embodiment of the present application.

### DETAILED DESCRIPTION

It should be noted that the terms "first" and "second" in the description, claims and drawings of the present application are used to distinguish similar objects, rather than describing a specific order or a sequence.

In addition, it should be noted that the method disclosed in the embodiment of the present application or the method shown in the flow chart includes one or more steps for implementing the method. Without departing from the scope of the claims, the execution order of multiple steps can be interchanged with each other, and some of the steps can also be deleted.

Some embodiments will be described below in conjunction with the accompanying drawings. The following embodiments and features in the embodiments may be combined with each other without conflict.

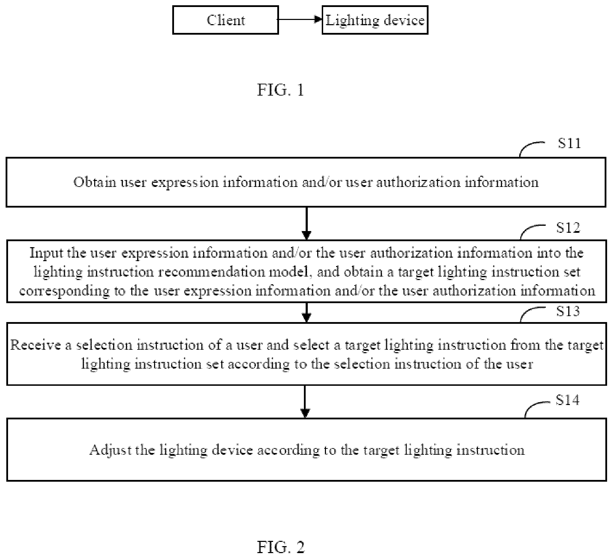

An application scenario of the embodiment of the present application is explained with reference to FIG. 1. User expression information can come from a displayed selection interface of a lighting device (for example, the displayed selection interface includes multiple expression information, and the user expression information is determined by monitoring a user selection of the expression information), or a client installed on a mobile device, or a mobile terminal on an electronic device and other devices that do not restrict user input operations, there are no restrictions here. The embodiment of the present application only takes the user expression information being from the client as an example, and the client is in a communication connection with the lighting device. The client can be a mobile device, a camera device, a video doorbell or a door lock, or other device with functions of a text collection, a voice collection and an image recording, to ensure that the user expression information can be obtained. The lighting device refers to a lighting equipment that can provide lighting functions.

In some embodiments, the client is used to collect the user expression information and/or user authorization information. Expression methods may include but are not limited to a voice expression, a text expression, a facial expression, a body expression, etc. The user expression information may be a demand expression of a lighting instruction, the lighting instruction includes a light color parameter, a color rhythm parameter and a light brightness parameter. In this way, the user expression information can be the demand expression of at least one parameter among the light color parameter, the color rhythm parameter and the light brightness parameter. For example, the user expression information may be a demand expression of the light color parameter such as "a yellow light, a red light", or the demand expression of the color rhythm parameter such as "a rhythm mode with an interval change of 0.5s ". In one embodiment, the above-mentioned expression methods can be text expression or the voice expression; in other embodiments, the facial expression and the body expression can also be set, lighting effects corresponding to expressions and body parts are preset, and by obtaining the lighting effect corresponding to the facial expression or the body expression, the user's needs for the lighting instruction can be determined. The lighting effects corresponding to expressions and body parts can be set according to actual needs, and there are no restrictions here. For example, the lighting effect corresponding to a "smiling" expression is the demand expression of the light color parameter such as "a yellow light, a red light", and the lighting effect corresponding to a "laughing" expression is the demand expression of the color rhythm parameter such as "the rhythm mode with the interval change of 0.5s". For another example, the lighting effect corresponding to a specified gesture action is the demand expression of the light color parameter such as "the yellow light, the red light", and the lighting effect corresponding to a specified body posture is the demand expression of the color rhythm parameter such as "the rhythm mode with the interval change of 0.5s". In other embodiments, the user expression information may also be expression information of usage scenarios of the lighting device such as "I want to read a book", "I want to sleep", "I want to cook", etc., which are not limited here. In some embodiments, the user authorization information can be collected by a corresponding device selected according to actual needs, which is not limited here. For example, the user authorization information may include, but is not limited to, information of a musical expression such as a type (for example, rock, sad, light music, etc.) of a music played at a current moment or played at a moment closest to the current moment, a music volume, and a music rhythm collected using an authorized voice recording device, or a scene (for example, a gray wall, a white wall, a type of the lighting device, or an image of a gray rainy day outside a window) of an area where the lighting device is located that is captured using an authorized camera device, or information collected by other smart devices under authorization, for example, user attribute information (such as an age, a gender, an education, a region, a marital status, a mood at the current moment (for example, the mood of the user can be determined by collecting the expression of the user) collected using a mobile phone and a past usage habit of the user for the lighting device (for example, user historical expression information corresponding to the lighting instruction)).

A lighting instruction recommendation model is stored in the lighting device. By analyzing the user expression information and/or the user authorization information through the lighting instruction recommendation model, a plurality of lighting instructions can be obtained. The lighting device then adjusts and controls the lighting effect at the current moment according to a target lighting instruction selected by the user from the plurality of lighting instructions.

FIG. 2 is a flow chart of a lighting device adjustment method provided by an embodiment of the present application. The lighting device adjustment method is applied to a lighting device. As shown in FIG. 2, according to different needs, an order of the steps in the flow chart can be changed, and some can be omitted.

S11, user expression information and/or user authorization information is obtained.

In some embodiments, a number of users corresponding to the user expression information may be one or multiple, that is, the user expression information may be output by a single user or may be output by multiple users, which will not be limited here. For example, when the user expression information is the user expression information of a single user, the user expression information is output by a user a; or when the user expression information includes user expression information of multiple users, user a and user b output a same user expression information. the "same" here may mean that user a and user b output expression information with a same semantics. For example, both user a and user b output the user expression information of "I am having a party"; or user a and user b output different user expression information. The "different" here may mean that user a and user b output expression information with different semantics. For example, user a outputs the user expression information of "I am having a party", and user b outputs the user expression information of "I want to read a book".

In some embodiments, a number of user expression information may be one piece or multiple pieces. It can be one piece of user expression information output by a single user, or it can be multiple pieces of user expression information output by a single user, or it can be multiple pieces of user expression information output by multiple users, and there is no limit here. When the client sends one user expression information output by a single user, it can recommend a target lighting instruction set to the user based on the user expression information, and then adjust the lighting device according to the target lighting instruction selected by the user from the target lighting instruction set; when the client sends multiple pieces of user expression information output by a single user, if the multiple pieces of user expression information are of different information types, the multiple pieces of user expression information can be combined to form a user expression information group, and then recommends a target lighting instruction set to the user based on the user expression information group, and then adjusts the lighting device according to the target lighting instruction selected by the user from the target lighting instruction set; when the client sends multiple pieces of user expression information output by a single user, if the multiple pieces of user expression information are of a same information type, it means that there is an update to information that the user wants to express. At this time, the multiple pieces of user expression information need to be filtered, and then a target lighting instruction set is recommended to the user based on the filtered user expression information, and then the lighting device is adjusted according to a target lighting instruction selected by the user from the target lighting instruction set. When the client sends multiple pieces of user expression information output by multiple users, if at the same time, the multiple users send user expression information for different areas on their respective clients, the target lighting instruction set is recommended to the user based on the user expression information. Then the lighting device in the corresponding area is adjusted accordingly according to the target lighting instruction selected by the user from the target lighting instruction set; if at the same time, the multiple users send user expression information for a same area on their respective clients, selects a main device from multiple clients, and recommends a target lighting instruction set to the user based on the user expression information corresponding to the main device, and then adjusts the lighting device according to the target lighting instruction selected by the user from the target lighting instruction set; or outputs prompts for the multiple users to select user expression information, and then recommends the target lighting instruction set to the user based on the selected user expression information, and then adjusts the lighting device according to the target lighting instruction selected by the user from the target lighting instruction set. Among them, information types include but are not limited to a voice type, a text type, an expression type, a body type, etc.

S12, the user expression information and/or the user authorization information is input into the lighting instruction recommendation model, and a target lighting instruction set corresponding to the user expression information and/or the user authorization information is obtained.

In some embodiments, the target lighting instruction set is a set composed of several target lighting instructions. A number of target lighting instructions is not limited and can be 1, 2 or more. The target lighting instruction refers to an instruction composed of lighting parameters for adjusting a lighting effect of the lighting device. The lighting parameters may include but are not limited to one or more of the light color parameter, the color rhythm parameter, and the light brightness parameter. In one embodiment, the lighting parameters can be expressed in a form of coding. Unique codes are respectively set for the light color parameter, the color rhythm parameter, and the light brightness parameter to obtain a light color code, a color rhythm code and a light brightness code. A form of the code can be a numerical code, an alphabetical code, or a color code. The lighting instruction can be a set of the light color code, the color rhythm code and the light brightness code with a highest probability value.

In some embodiments, the user expression information and/or the user authorization information is input into the lighting instruction recommendation model, and the lighting instruction recommendation model processes the above information to obtain the target lighting instruction set. Among them, the lighting instruction recommendation model can be a neural network model. By using the user expression information and/or the user authorization information as input vectors, using the corresponding lighting instructions as output vectors to train the neural network model until the model converges and the lighting instruction recommendation model that have been trained is obtained. In one embodiment, training data of the lighting instruction recommendation model includes historical interaction information between the user and the lighting device. The historical interaction information may include the user expression information and/or the user authorization information and the corresponding lighting instructions. For example, the user expression information is "I am having a party, a red-orange light", the user authorization information is "Sing, a louder volume", "Female, 23 years old, undergraduate, Guangdong" and "Indoor scene is white tone", the corresponding lighting instruction is "a red light, a purple light and an orange light, the rhythm with the interval change of 0.5s" ; the user expression information is "I want to read a book", the user authorization information is "a light music, a low volume", "a female, 23 years old, undergraduate, Guangdong" and "the indoor scene is gray tone", the corresponding lighting instruction is "a bright white light, the rhythm mode is unchanged".

In another embodiment, the training data may include user expression information and/or user authorization information of other users that are similar to a user portrait corresponding to the user of a current lighting device and corresponding lighting instructions that are finally displayed. Use lighting devices of different users as blockchain nodes to build a blockchain network. Upon an authorization by the user, each lighting device can provide a correspondence between the user expression information and/or the user authorization information and the lighting instruction. For example, assume that a blockchain node A, a blockchain node B and a blockchain node C are in the blockchain network. Among them, the blockchain node A corresponds to a lighting device of a user A, the blockchain node B corresponds to a lighting device of a user B, the blockchain node C corresponds to a lighting device of a user C. In one embodiment, historical user expression information whose similarity to the user expression information and/or the user authorization information is higher than a preset similarity threshold is determined from the blockchain network. The preset similarity threshold is a preset value used to identify a similarity between the user expression information and/or the user authorization information. For example, the user expression information and/or the user authorization information corresponding to a user D is {I am having a party; Sing }, and the user expression information and/or the user authorization information corresponding to the user A stored in blockchain node A is {I am having a party, Sing }, the user expression information and/or the user authorization information corresponding to the user B stored in blockchain node B is {I am reading a book; a light music}, and the user authorization information corresponding to the user C stored in blockchain node C is {I am cooking; a light music}. It can be seen from this that the user A is closest to the user expression information and/or the user authorization information of the user D. The user expression information and/or the user authorization information of the user A is used as the historical user expression information and/or the historical user authorization information whose similarity to the user expression information and/or the user authorization information of the user D is higher than the preset similarity threshold. In one embodiment, the similarity can be determined by vectorizing the user expression information and/or the user authorization information, and then calculating a Euclidean distance between vectors.

In one embodiment, a number of blockchain nodes in the blockchain network may be large. Therefore, there may construct a first user portrait corresponding to the user D (for example, an age of the user, a gender of the user, an occupation of the user, a model of a lighting device selected by the user, an address of the user, etc.) and a second user portrait of each user in the blockchain network, select users who are similar or identical to the first user portrait from multiple second user portraits as users whose behavior preferences are similar to the user D, determine historical user expression information and/or historical user authorization information from such users whose similarity to the user expression information and/or the user authorization information is higher than the preset similarity threshold, to improve an accuracy of a determination of the historical user expression information, such that improve an accuracy of a training of the lighting instruction recommendation model, and recommend the target lighting instruction set to the user based on the lighting instruction recommendation model, so that the recommended lighting instruction set is closer to the lighting effect that the user likes, and the lighting effect is consistent with the user's actual needs.

S13, a selection instruction of a user is received and a target lighting instruction is selected from the target lighting instruction set according to the selection instruction of the user.

In some embodiments, the target lighting instruction set is output to the client or displayed on the lighting device, and the user make a selection for the target lighting instruction set on the client or the lighting device. A selection method may include a touch selection or a voice selection. etc. there is no restriction here. In response to the selection instruction of the user, the lighting device selects the target lighting instruction from the target lighting instruction set according to the selection instruction.

In some embodiments, after the target lighting instruction set is recommended to the user, monitor whether the selection instruction of the user is received within a preset time period. If the selection instruction of the user is received, it indicates that there is a lighting effect meeting a personalized needs of the user in target lighting instruction set; if the selection instruction of the user is not received, it means that there is no lighting effect meeting the personalized needs of the user in target lighting instruction set. Among them, the preset time period can be preset, for example, the preset time period can be 1 minute. In one embodiment, if the selection instruction of the user is not received, the lighting device can prompt the user to enter the lighting instruction by himself, and record the lighting instruction so as to update the lighting instruction recommendation model later; in other embodiments, the lighting device can also output multiple lighting parameter adjustment strategies, receive and determine a target lighting parameter adjustment strategy selected by the user, and adjust the target lighting instruction according to the target lighting parameter adjustment strategy to obtain an updated target lighting instruction. Among them, the lighting parameter adjustment strategy refers to a strategy for adjusting lighting parameters included in the target lighting instruction. The lighting parameters may include but are not limited to a light color parameter, a color rhythm parameter, and a light brightness parameter. The lighting parameters in the lighting parameter adjustment strategy can be randomly generated, or can be determined based on a received feedback of the user (for example, if the feedback of the user is "too bright", then reduce the light brightness parameter; if the feedback of the user is "too dark", then increase the light brightness parameter). A number of the lighting parameter adjustment strategies can be one or multiple, and there is no limit here.

S14, the lighting device is adjusted according to the target lighting instruction.

In one embodiment, obtain the lighting parameters in the target lighting instruction, and directly switch the lighting effect of the lighting device according to the lighting parameters, so as to realize adjusting the lighting effect. The present application directly switches the lighting effect of the lighting device according to the lighting parameters corresponding to the target lighting instruction, without a need to analyze current lighting parameters of the lighting device, to achieve a rapid adjustment of the lighting effect.

The lighting device adjustment method provided by the embodiment of the present application obtains the user expression information and/or the user authorization information; and inputs the user expression information and/or the user authorization information into the lighting instruction recommendation model to obtain the target lighting instruction set corresponding to the user expression information and/or the user authorization information; then, receives the selection instruction of the user and selects the target lighting instruction from the target lighting instruction set according to the selection instruction of the user, and adjusts the lighting device according to the target lighting instruction. The embodiment of the present application inputs the user expression information and/or the user authorization information into the lighting instruction recommendation model to obtain the target lighting instruction set that is to be recommended, and then obtains the target lighting device in response to the selection instruction of the user for the target lighting instruction set, realizes the adjustment of the lighting device, and recommends the personalized lighting effect to the user.

In some embodiments, the user may be a previous user who has output the user expression information many times, or a new user who has output the user expression information for a first time or rarely output the user expression information. The new user who outputs the user expression information for the first time or rarely outputs the user expression information is considered as a target user. For such user, due to a lack of interaction with the lighting device, the lighting device lacks a basis to recommend the lighting instruction to the user. In order to solve the above problem, embodiments of the present application can also process the user expression information of such target user through a meta-learning to obtain a corresponding target lighting instruction, and continuously improve a recommendation effect of the lighting instruction.

Accordingly, after determining the user expression information and/or the user authorization information, the method further includes: determining user attribute information corresponding to the user authorization information; if the user is determined to be the target user according to the user attribute information, then invoking the lighting instruction determination model to process the user attribute information to obtain a target user group corresponding to the user attribute information and a target lighting instruction corresponding to the target user group; and adjusting the lighting device according to the target lighting instruction.

In one embodiment, the user attribute information may include, but is not limited to, an age, a gender, an education, a region, a marital status, a mood at a current moment (for example, the mood of the user can be determined by collecting the user expression), and a previous habit of the user using the lighting device (for example, the user historical expression information corresponding to lighting instructions, etc.) and other information. The above user attribute information can be obtained through registration information of the user when the user uses the lighting device, or can be obtained by performing a semantic analysis on chat content in a chat software authorized by the user, and the region of the user can also be determined through a GPS positioning system, the age, the gender, and the mood of the user can be obtained through a face recognition, etc., which is not limited here. In one embodiment, whether the user is the target user can be determined by determining the previous usage habit of the user using the lighting device in the user attribute information. For example, if there is no or a small amount of previous usage habits of the user using the lighting device in the user attribute information, it can be determined that the user is the target user; if there are many previous usage habits of the user using the lighting device in the user attribute information, it can be determined that the user is not the target user.

In one embodiment, the lighting instruction determination model may be a meta-learning model. Input data of the model is the user attribute information, and output data is the target user group and the target lighting instruction corresponding to the target user group. The target user group refers to a collection of multiple users with the same user attribute information. For example, there are user group A and user group B. Among them, the user group A is composed of women from a place A who are between 18 and 25 years old, the user group B is composed of men from a place B who are between 25 and 35 years old. The lighting instruction determination model processes the user attribute information that is input, determines a matching degree between the user attribute information and user attribute information in a preset user group, and selects a user group with a highest matching degree as the target user group. In one embodiment, there is an association relationship between the user group and the lighting instruction. By querying the association relationship, the target lighting instruction corresponding to the target user group can be obtained. Afterwards, the lighting device is adjusted according to the target lighting instruction. In an embodiment, the number of target lighting instructions corresponding to the target user group may be one or multiple. When the number of target lighting instructions corresponding to the target user group is multiple, the multiple target lighting instructions can be output to the user, and the user selects the required target lighting instruction from the multiple target lighting instructions to adjust the lighting device.

In some embodiments, after invoking the lighting instruction determination model to process the user attribute information to obtain the target user group corresponding to the user attribute information and the target lighting instruction corresponding to the target user group, the method further includes: If the user has a negative feedback on the target lighting instruction corresponding to the target user group, receiving the user expression information and/or the user authorization information of the target user, and inputting the user expression information and/or the user authorization information into the lighting instruction recommendation model, obtaining the target lighting instruction set corresponding to the user expression information and/or the user authorization information; receiving the selection instruction of the user and selecting the target lighting instruction from the target lighting instruction set according to the selection instruction of the user; adjusting the lighting device according to the target lighting instruction. Among them, the negative feedback refers to feedback information that users are not satisfied with the target lighting instruction corresponding to the target user group. The negative feedback can include but is not limited to a negative facial expression feedback, a negative body feedback, a negative voice feedback, a negative text feedback, and a feedback method such as no response within a preset time interval. The negative facial expression feedback can include an expression such as "frown" and a "crying face". The negative body feedback can include a body movement such as "akimbo". The negative voice feedback can include outputting a voice message such as "dissatisfied" and "dislike". The negative text feedback can be outputting text information such as "not satisfied" or "disliked" to the lighting device. The preset time interval is a preset user response time duration to the target lighting instruction corresponding to the target user group. For example, the preset time interval may be 30 seconds. Embodiments of the present application can receive the user expression information and/or the user authorization information of the target user when the meta-learning model does not recommend the target lighting instruction that satisfies the target user, and then use the lighting instruction recommendation model to process the user expression information and/or the user authorization information, recommends the target lighting instruction set to the user, and lets the user select a satisfactory target lighting instruction from the target lighting instruction set to adjust the lighting device, so that the lighting effect adapts to the user's actual needs.

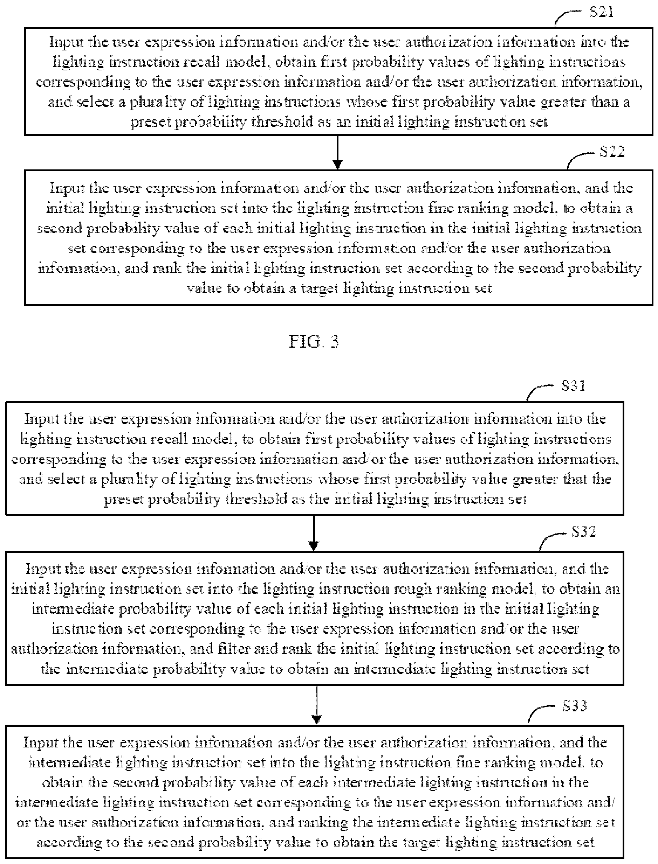

In some embodiments, the lighting instruction recommendation model may include one or more sub-models such as a lighting instruction recall model, a lighting instruction rough ranking model, a lighting instruction fine ranking model, and a lighting instruction reranking model. Exemplarily, the lighting instruction recommendation model may include the lighting instruction recall model and the lighting instruction fine ranking model, among them, the lighting instruction recall model is used to recall an initial lighting instruction set related to the user expression information and/or the user authorization information from a large number of lighting instructions. The lighting instruction fine ranking model is used to prioritize the initial lighting instruction set so that the user can select the target lighting instruction from the target lighting instruction set. FIG. 3 is a flow chart for determining the target lighting instruction set provided by an embodiment of the present application. The method for determining the target lighting instruction set is applied to the lighting device. As shown in FIG. 3, it includes the following steps:
S21, the user expression information and/or the user authorization information is input into the lighting instruction recall model, first probability values of lighting instructions corresponding to the user expression information and/or the user authorization information are obtained, and a plurality of lighting instructions whose first probability value greater than a preset probability threshold are selected as an initial lighting instruction set.

In some embodiments, by inputting the user expression information and /or the user authorization information as input data into the lighting instruction recall model, the first probability value of each lighting instruction being selected by the user can be obtained, and the lighting instructions whose first probability value greater than the preset probability threshold are selected to compose the initial lighting instruction set, and the preset probability threshold is a preset value.

In one embodiment, a recall algorithm corresponding to the lighting instruction recall model may include at least one of an embedded recall algorithm, a collaborative filtering recall algorithm, and a graph theory recall algorithm, which is not limited here. For example, if the recall algorithm is the embedded recall algorithm, the user expression information and/or the user authorization information and the lighting instructions are respectively mapped into low-dimensional dense vectors, and then the lighting instructions corresponding to the user expression information and/or the user authorization information are recalled through an efficient retrieval method; if the recall algorithm is the collaborative filtering recall algorithm, a user group that is the same or similar to the user expression information and/or user authorization information is determined through a collaborative filtering, and the initial lighting instruction set is determined based on the lighting instructions corresponding to the user group; if the recall algorithm is the graph theory recall algorithm, the user expression information and/or the user authorization information is used as a first node, and the lighting instruction is used as a second node, and an adjacency matrix of the lighting instruction corresponding to the user expression information and/or the user authorization information is constructed based on an interactive relationship between the first node and the second node, and then the initial lighting instruction set of interest corresponding to the user expression information and/or the user authorization information is determined according to the adjacency matrix.

S22, the user expression information and/or the user authorization information, and the initial lighting instruction set are input into the lighting instruction fine ranking model, to obtain a second probability value of each initial lighting instruction in the initial lighting instruction set corresponding to the user expression information and/or the user authorization information, and the initial lighting instruction set is ranked according to the second probability value to obtain a target lighting instruction set.

In some embodiments, the user expression information and/or the user authorization information, and the initial lighting instruction set are used as inputs of the lighting instruction fine ranking model, and the lighting instruction fine ranking model calculates the second probability value of each initial lighting instruction in the initial lighting instruction set to be selected by the user, ranking the initial lighting instruction set from high to low according to the second probability value to obtain the target lighting instruction set.

The embodiments of the present application combines the lighting instruction recall model and the lighting instruction fine ranking model, the user expression information and/or the user authorization information, and uses the lighting instruction recall model to recall the initial lighting instruction set related to the user expression information and/or the user authorization information from the large number of lighting instructions, prioritizing the initial lighting instruction set through the lighting instruction fine ranking model so that the user can select the target lighting instruction from the target lighting instruction set, and can recommend personalized lighting effects to the user.

In some embodiments, in addition to the lighting instruction recall model and the lighting instruction fine ranking model, the lighting instruction recommendation model may also include the lighting instruction rough ranking model. The lighting instruction rough ranking model is used to filter and roughly rank the initial lighting instruction set. FIG. 4 is a flow chart for determining the target lighting instruction set provided by another embodiment of the present application. The method for determining the target lighting instruction set is applied to the lighting device. As shown in FIG. 4, it includes the following steps:
S31, the user expression information and/or the user authorization information is input into the lighting instruction recall model, to obtain first probability values of lighting instructions corresponding to the user expression information and/or the user authorization information, and a plurality of lighting instructions whose first probability value greater that the preset probability threshold are selected as the initial lighting instruction set.
S32, the user expression information and/or the user authorization information, and the initial lighting instruction set are input into the lighting instruction rough ranking model, to obtain an intermediate probability value of each initial lighting instruction in the initial lighting instruction set corresponding to the user expression information and/or the user authorization information, and the initial lighting instruction set according to the intermediate probability value is filtered and ranked to obtain an intermediate lighting instruction set.

In some embodiments, the user expression information and/or the user authorization information, and the initial lighting instruction set are input into the device lighting instruction rough ranking model as input data, and the lighting instruction rough ranking model calculates the intermediate probability value of each initial lighting instruction in the initial lighting instruction set to be selected by the user, after that, selects the initial lighting instructions whose intermediate probability value exceeds the preset probability threshold from the initial lighting instruction set, and ranking the initial lighting instructions according to the intermediate probability value from high to low to obtain the intermediate lighting instruction set. Among them, the preset probability threshold is a preset value.

S33, the user expression information and/or the user authorization information, and the intermediate lighting instruction set are input into the lighting instruction fine ranking model, to obtain the second probability value of each intermediate lighting instruction in the intermediate lighting instruction set corresponding to the user expression information and/or the user authorization information, and the intermediate lighting instruction set is ranked according to the second probability value to obtain the target lighting instruction set.

Embodiments of the present application uses the lighting instruction rough ranking model to filter and roughly rank the initial lighting instruction set. Under a premise of ensuring a certain accuracy, a number of selected lighting instructions is further reduced, so that the user can quickly select the target lighting instruction from the target lighting instruction set, to improve the efficiency of recommending the personalized lighting effect.

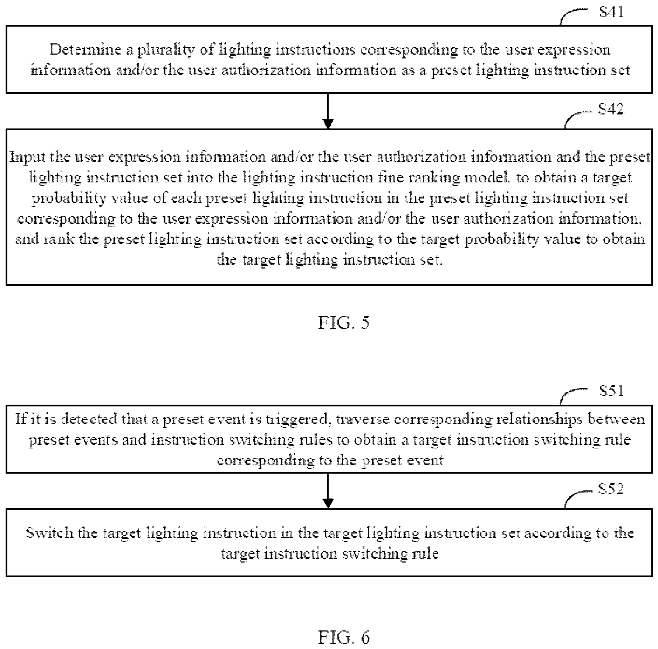

In some embodiments, the plurality of lighting instructions input into the lighting instruction fine ranking model can also be preset. FIG. 5 is a flow chart for determining the target lighting instruction set provided by yet another embodiment of the present application. A determination method of the target lighting instruction set is applied to the lighting device. As shown in FIG. 5, it includes the following steps:
S41, a plurality of lighting instructions corresponding to the user expression information and/or the user authorization information are determined as a preset lighting instruction set.

In some embodiments, a preset database is set, and the preset database stores a preset mapping relationship of user expression information and/or user authorization information corresponding to a preset lighting instruction set. In one embodiment, if there is only user expression information and there is no authorization to obtain information about a music played at the current moment, user attributes or an indoor scene, then a first mapping relationship between the user expression information and the preset lighting instruction set is stored in the preset database. If there is no user expression information, only the information about the music played at the current moment, the user attributes or the indoor scene is obtained under authorization, and a second mapping relationship between the user authorization information and the preset lighting instruction set is stored in the preset database. If there is the user expression information and the authorized information about the music played at the current moment, the user attributes or the indoor scene is obtained, the preset database stores a third mapping relationship between the user expression information and the user authorization information and the preset lighting instruction set. Among them, if there is the user expression information and the authorized information about the music played at the current moment, the user attributes or the indoor scene that is obtained under authorization, the user expression information and the user authorization information are combined according to a preset data format, and then the third mapping relationship is traversed according to the combined information to obtain the preset lighting instruction set. The preset data format is preset. For example, the preset data format can be {user expression information; user authorization information}, which is not limited here.

S42, the user expression information and/or the user authorization information and the preset lighting instruction set are input into the lighting instruction fine ranking model, to obtain a target probability value of each preset lighting instruction in the preset lighting instruction set corresponding to the user expression information and/or the user authorization information, and the preset lighting instruction set is ranked according to the target probability value to obtain the target lighting instruction set.

The embodiment of the present application determines the preset lighting instruction set through the mapping relationship between the user expression information and/or the user authorization information and the preset lighting instruction set. Compared with obtaining the lighting instruction set through an operation of the model, the lighting instruction set can be obtained quickly and improve the efficiency of recommending the personalized lighting effect.

In some embodiments, if an amount of data of the lighting instructions corresponding to the user expression information and/or the user authorization information is small (for example, the number of lighting instructions is 10), the lighting instruction recommendation model may not need to distinguish the lighting instruction recall model and the lighting instruction fine ranking model. Exemplarily, the method further includes: inputting the user expression information and/or the user authorization information into the lighting instruction fine ranking model, and obtain a probability value of each lighting instruction in the lighting instruction set corresponding to the user expression information and/or the user authorization information, and filtering and ranking the lighting instruction set according to the probability value to obtain the target lighting instruction set. Embodiments of the present application can directly use the lighting instruction fine ranking model to process the user expression information and/or the user authorization information when the amount of lighting effect data is small, to obtain the target lighting instruction set to be recommended, and simplify the determination process of the target lighting instruction set, to more quickly recommend personalized lighting effects to users.

In some embodiments, in addition to the lighting instruction recall model, the lighting instruction rough ranking model, and the lighting instruction fine ranking model, the lighting instruction recommendation model may also include the lighting instruction reranking model, and a processing process of the lighting instruction reranking model may be after the lighting instruction fine ranking model, it is used to filter the plurality of lighting instructions ranked by the lighting instruction fine ranking model. For example, the lighting instruction reranking model is used to remove a lighting instruction that the user has already used from the plurality of lighting instructions, and ensure a diversity among multiple recommended lighting instructions. Each lighting instruction can be added with a preset tag. The preset tag is used to identify a number of times the lighting instruction has been used. By querying the preset tag, the lighting instruction that the user has used can be determined from multiple lighting instructions. The embodiment of the present application combines the lighting instruction reranking model to filter multiple lighting instructions to ensure the diversity among the multiple recommended lighting instructions, thereby more accurately recommending personalized lighting effects to users.

FIG. 6 is a switching flow chart of target lighting instructions provided by an embodiment of the present application. A switching process of target lighting instructions is applied to the lighting device. As shown in FIG. 6, it includes the following steps:
S51, if it is detected that a preset event is triggered, corresponding relationships between preset events and instruction switching rules are traversed to obtain a target instruction switching rule corresponding to the preset event.

In some embodiments, the preset event refers to an event that is preset and can cause a change in the lighting effect of the lighting device. For each preset event, there is a corresponding instruction switching rule. The instruction switching rule refers to a rule for switching the target lighting instructions in at least one set.

S52, the target lighting instruction in the target lighting instruction set is switched according to the target instruction switching rule.

In one embodiment, the preset event may include a selection operation of the user for the lighting effect. For example, the user switches the lighting effect by a clicking operation or continuously clicking operations on the client. If the clicking operation or the continuously clicking operations is detected on the client, switch from a current target lighting instruction to a next target lighting instruction in a set of target lighting instructions. For another example, the user chooses to execute a set of target lighting instructions with a time interval of 5 minutes. If a monitored time interval reaches 5 minutes, the lighting device switches to the next target lighting instruction every 5 minutes in an order of priority until all are executed. complete. In other embodiments, the preset events may also include an environmental sound change, an environmental brightness change, a music change, a temperature change, a time change, etc. Taking the preset event as the time change as an example, from 7 pm to 10 pm, the user determines a target lighting instruction A at 7 o'clock; and at 9 o'clock, a next target lighting instruction B will be switched, among them, a brightness corresponding to the target lighting instruction B is darker than the target lighting instruction A, or a time interval of light-off corresponding to the target lighting instruction B is longer than the target lighting instruction A.

In the embodiment of the present application, when the preset event that is triggered is detected, switch the target lighting instructions for the target lighting instruction set according to the instruction switching rule corresponding to the preset event, so that the lighting instructions can be dynamically adjusted according to the user's needs, thereby personalized lighting effects can be recommended to users.

In some embodiments, if the user expression information includes user expression information of multiple users, the method further includes: outputting prompt information; if a confirmation instruction of a user for the prompt information is received, executing the user expression information corresponding to the confirmation instruction. The prompt information is used to prompt the user that the lighting device has received user expression information from multiple users, and the user expression information to be executed needs to be determined from the user expression information of the multiple users. The confirmation instruction may refer to a selection information of the user for multiple pieces of user expression information. The confirmation instruction may be a touch instruction, a voice instruction, a text instruction, etc., and is not limited here.

In some embodiments, if the user expression information includes user expression information of multiple users, the method further includes: determining a client corresponding to the user expression information; if the client is a target client, executing the user expression information corresponding to the target client. Multiple users send user expression information through their respective clients. In actual application scenarios, a main client (i.e., the target client in the present application) corresponding to the lighting device can be bound. When the main client outputs user expression information, the user expresses information can be executed first. In other embodiments, if the number of user expression information output by a same client is multiple, it can also be determined whether they are output by multiple users through a voiceprint recognition or other methods. Afterwards, a main user (for example, a head of a household) is selected from the multiple users, and the user expression information of the main user is executed first. For example, taking the user expression information as a voice expression as an example, when there are multiple voice expressions, the multiple voice expressions can be processed through a pre-trained voiceprint recognition model to determine a voiceprint characteristic corresponding to each voice expression; when all voiceprint characteristics are same, it is determined that the number of users corresponding to the user expressions is one, that is, one user has output multiple voice expressions, when the voiceprint features are different, it is determined that the number of users corresponding to the user expressions is multiple.

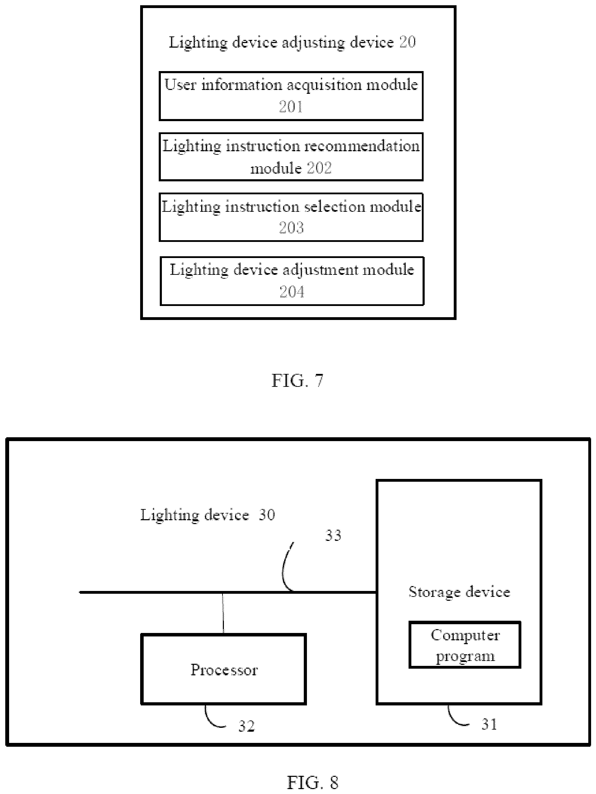

Please refer to FIG. 7, FIG. 7 is a schematic structural diagram of a lighting device adjustment device provided by an embodiment of the present application. In some embodiments, a lighting device adjusting device 20 may include a plurality of functional modules composed of computer program segments. The computer program of each program segment in the lighting device adjusting device 20 may be stored in a storage device of a computer device 30 and executed by at least one processor to perform the function of adjusting the lighting device (see FIG. 2 for details).

In this embodiment, the lighting device adjusting device 20 can be divided into multiple functional modules according to the functions it performs. The functional modules may include: a user information acquisition module 201, a lighting instruction recommendation module 202, a lighting instruction selection module 203, and a lighting device adjustment module 204. The module referred to in the present application refers to a series of computer program segments that can be executed by at least one processor and can complete fixed functions, which are stored in the storage device. In this embodiment, the functions of each module will be described in detail in subsequent embodiments.

The user information acquisition module 201 can be used to acquire user expression information and/or user authorization information.

The lighting instruction recommendation module 202 may be used to input the user expression information and/or the user authorization information into a lighting instruction recommendation model to obtain a target lighting instruction set corresponding to the user expression information and/or the user authorization information.

The lighting instruction selection module 203 may be used to receive a selection instruction of a user and select a target lighting instruction from the target lighting instruction set according to the selection instruction of the user.

The lighting device adjustment module 204 may be used to adjust the lighting device according to the target lighting instruction.

In some embodiments, the lighting instruction recommendation module 202 is also used to input the user expression information and/or the user authorization information into a lighting instruction recall model, to obtain first probability values of lighting instructions corresponding to the user expression information and/or the user authorization information, and select a plurality of lighting instructions whose first probability value greater that a preset probability threshold as an initial lighting instruction set; input the user expression information and/or the user authorization information, and the initial lighting instruction set into a lighting instruction fine ranking model, to obtain a second probability value of each initial lighting instruction in the initial lighting instruction set corresponding to the user expression information and/or the user authorization information, and rank the initial lighting instruction set according to the second probability value to obtain the target lighting instruction set.

In some embodiments, the lighting instruction recommendation module 202 is also used to input the user expression information and/or the user authorization information into a lighting instruction recall model, to obtain first probability values of lighting instructions corresponding to the user expression information and/or the user authorization information, and select a plurality of lighting instructions whose first probability value greater that a preset probability threshold as an initial lighting instruction set; input the user expression information and/or the user authorization information, and the initial lighting instruction set into a lighting instruction rough ranking model, to obtain an intermediate probability value of each initial lighting instruction in the initial lighting instruction set corresponding to the user expression information and/or the user authorization information, and filter and rank the initial lighting instruction set according to the intermediate probability value to obtain an intermediate lighting instruction set; input the user expression information and/or the user authorization information, and the intermediate lighting instruction set into a lighting instruction fine ranking model, to obtain a second probability value of each intermediate lighting instruction in the intermediate lighting instruction set corresponding to the user expression information and/or the user authorization information, and rank the intermediate lighting instruction set according to the second probability value to obtain the target lighting instruction set.

In some embodiments, the lighting instruction recommendation module 202 is also used to determine a plurality of lighting instructions corresponding to the user expression information and/or the user authorization information as a preset lighting instruction set; input the user expression information and/or the user authorization information into the lighting instruction fine ranking model, to obtain a target probability value of each preset lighting instruction in the preset lighting instruction set corresponding to the user expression information and/or the user authorization information, and rank the preset lighting instruction set according to the target probability value to obtain the target lighting instruction set; or input the user expression information and/or the user authorization information into the lighting instruction fine ranking model, to obtain a lighting instruction set corresponding to the user expression information and/or the user authorization information and a probability value of each preset lighting instruction in the preset lighting instruction set, and filter and rank the lighting instruction set according to the probability value to obtain the target lighting instruction set.

In some embodiments, the lighting instruction recommendation module 202 is also used to traverse a preset mapping relationship of user expression information and/or user authorization information corresponding to lighting instructions, and obtain the preset lighting instruction set composed of the plurality of lighting instructions.

In some embodiments, the user information acquisition module 201 is also used to determine user attribute information corresponding to the user authorization information; if a user is determined to be a target user according to the user attribute information, then invoke a lighting instruction determination model to process the user attribute information to obtain a target user group corresponding to the user attribute information and a target lighting instruction corresponding to the target user group; and adjust the lighting device according to the target lighting instruction.

It can be understood that the lighting device adjustment device 20 and the lighting device adjustment method in the above embodiment belong to a same inventive concept. A specific implementation of each module of the lighting device adjustment device 20 is corresponding to each step of the lighting device adjustment method in the above embodiment. The present application does not redescribe it here.

The division of the modules described above is a logical function division, and there may be other division methods in actual implementation. In addition, each functional module in each embodiment of the present application can be integrated in a same processing unit, or each module can exist physically alone, or two or more modules can be integrated in a same unit. The above integrated modules can be implemented in a form of hardware or in a form of a hardware function module plus a software function module.

FIG. 8 is a schematic structural diagram of a lighting device provided by an embodiment of the present application. As shown in FIG. 8, a lighting device 30 includes a storage device 31, at least one processor 32 and at least one communication bus 33. The processor 32 is used to implement the lighting device adjustment method when executing a computer program stored in the storage device 31, the at least one communication bus 33 is used to realize a communication connection between the storage device 31 and the at least one processor 32 and the like.

A structure of the lighting device shown in FIG. 8 does not limit the embodiment of the present application. The lighting device 30 may also include more or less other hardware or software than shown in the figure, or different component arrangements.

In some embodiments of the present application, the lighting device 30 can also be connected to a client device. The client device includes but is not limited to any one electronic product such as a personal computer, a tablet, a smartphone, a digital camera, etc. that can perform a human-computer interaction with a user through a keyboard, a mouse, a remote control, a touch pad, or a voice control device, etc.

It should be noted that the lighting device 30 is only an example. If other existing or future electronic products can be adapted to the present application, they should also be included in a protection scope of the present application and are included here by reference.

In some embodiments, the lighting device 30 may also include a variety of sensors, a Bluetooth module, a Wi-Fi module, etc., which will not be described again here.

A computer program is stored in the storage device 31, and when the computer program is executed by the at least one processor 32, all or part of the steps in the lighting device adjustment method are implemented. The storage device 31 includes a read-only memory (ROM), a programmable read-only memory (PROM), an erasable programmable read-only memory (EPROM), a one-time Programmable Read-Only Memory (OTPROM), an Electronically Erasable Programmable Read-Only Memory (EEPROM), a Compact Disc Read-Only Memory (CD-ROM) or other optical disk storage, a magnetic disk storage, a magnetic tape storage, or any other computer-readable medium that can be used to carry or store data.

Further, the computer-readable storage medium may mainly include a storage program area and a storage data area, among them, the storage program area may store an operating system, an application program required for at least one function, etc.; the storage data area may store data created according to a use of the lighting device 30.

In some embodiments, the at least one processor 32 is a control unit of the lighting device 30, using various interfaces and lines to connect various components of the entire lighting device 30, by running or executing programs or modules stored in the storage device 31, and invoking the data stored in the storage device 31 to perform various functions and process data of the lighting device 30. For example, when the at least one processor 32 executes the computer program stored in the storage device, it implements all or part of the steps of the lighting device adjustment method in the embodiment of the present application; or implements all or part of the functions of the lighting device adjustment device. The at least one processor 32 may be composed of an integrated circuit, for example, it may be composed of a single packaged integrated circuit, or it may be composed of multiple integrated circuits packaged with a same function or different functions, including one or more central processing units (CPU), a microcontroller, a digital processing chip, a graphics controller and a various control chip combinations, etc.

The above-mentioned integrated units implemented in the form of software function modules can be stored in a computer-readable storage medium. The above-mentioned software function modules are stored in a storage medium and includes a number of instructions to cause a lighting device (which can be a personal computer, a lighting device, or a network device, etc.) or a processor to execute part of the method of each embodiment of the present application.

In the several embodiments provided in the present application, it should be understood that the disclosed devices and methods can be implemented in other ways. For example, the device embodiments described above are only illustrative. For example, the division of modules is only a logical function division, and there may be other division methods in actual implementation.

Modules described as separate components may or may not be physically separate, components shown as modules may or may not be physical units, and may be located in one place, or may be distributed to multiple network units. Some or all of the modules can be selected according to actual needs to achieve the purpose of the solution of this embodiment.

In addition, each functional module in various embodiments of the present application can be integrated into one processing unit, or each unit can exist physically alone, or two or more units can be integrated into one unit. The above-mentioned integrated unit can be implemented in the form of hardware or in the form of hardware function modules plus software function modules.

It is obvious to those skilled in the art that the present application is not limited to the details of the above-described exemplary embodiments, and that the present application can be implemented in other specific forms without departing from the spirit or essential characteristics of the present application. Therefore, the embodiments should be regarded as illustrative and non-restrictive from any point of view, and the scope of the present application is defined by the appended claims rather than the above description, and it is therefore intended that all changes that fall within the meaning and scope of equivalent elements of the claims are included in this application. Any reference signs in the claims shall not be construed as limiting the claim in question. Furthermore, it is obvious that the word "including" does not exclude other elements or the singular does not exclude the plural. Multiple units or devices stated in the specification may also be implemented by one unit or device through software or hardware. Words such as first and second are used to indicate names and do not indicate any specific order.

Finally, it should be noted that the above embodiments are only used to illustrate the technical solutions of the present application and are not limiting. Although the present application has been described in detail with reference to the preferred embodiments, those of ordinary skill in the art should understand that the technical solutions of the present application can be modified. Modifications or equivalent substitutions may be made without departing from the spirit and scope of the technical solution of the present application.

## Claims

1. A lighting device adjustment method, applied to a lighting device, wherein the method comprises:
obtaining user expression information and/or user authorization information;
inputting the user expression information and/or the user authorization information into a lighting instruction recommendation model to obtain a target lighting instruction set corresponding to the user expression information and/or the user authorization information;
receiving a selection instruction of a user and selecting a target lighting instruction from the target lighting instruction set according to the selection instruction of the user;
adjusting the lighting device according to the target lighting instruction.

2. The method of claim 1, wherein the user expression information comprises at least one of a voice expression, a text expression, a facial expression, and a body expression; the user authorization information comprises at least one of user attribute information, information of a music, and information of a scene.

3. The method of claim 1, wherein if the lighting instruction recommendation model comprises a lighting instruction recall model and a lighting instruction fine ranking model, then "inputting the user expression information and/or the user authorization information into a lighting instruction recommendation model to obtain a target lighting instruction set corresponding to the user expression information and/or the user authorization information" comprises:
inputting the user expression information and/or the user authorization information into the lighting instruction recall model, to obtain first probability values of lighting instructions corresponding to the user expression information and/or the user authorization information, and selecting a plurality of lighting instructions whose first probability value being greater than a preset probability threshold as an initial lighting instruction set;
inputting the user expression information and/or the user authorization information, and the initial lighting instruction set into the lighting instruction fine ranking model, to obtain a second probability value of each initial lighting instruction in the initial lighting instruction set corresponding to the user expression information and/or the user authorization information, and ranking the initial lighting instruction set according to the second probability value to obtain the target lighting instruction set.

4. The method of claim 1, wherein if the lighting instruction recommendation model comprises a lighting instruction recall model, a lighting instruction rough ranking model and a lighting instruction fine ranking model, then "inputting the user expression information and/or the user authorization information into a lighting instruction recommendation model to obtain a target lighting instruction set corresponding to the user expression information and/or the user authorization information" comprises:
inputting the user expression information and/or the user authorization information into the lighting instruction recall model, to obtain first probability values of lighting instructions corresponding to the user expression information and/or the user authorization information, and selecting a plurality of lighting instructions whose first probability value greater that a preset probability threshold as an initial lighting instruction set;
inputting the user expression information and/or the user authorization information, and the initial lighting instruction set into the lighting instruction rough ranking model, to obtain an intermediate probability value of each initial lighting instruction in the initial lighting instruction set corresponding to the user expression information and/or the user authorization information, and filtering and ranking the initial lighting instruction set according to the intermediate probability value to obtain an intermediate lighting instruction set;
inputting the user expression information and/or the user authorization information, and the intermediate lighting instruction set into the lighting instruction fine ranking model, to obtain a second probability value of each intermediate lighting instruction in the intermediate lighting instruction set corresponding to the user expression information and/or the user authorization information, and ranking the intermediate lighting instruction set according to the second probability value to obtain the target lighting instruction set.

5. The method of claim 1, wherein if the lighting instruction recommendation model comprises a lighting instruction fine ranking model, then "inputting the user expression information and/or the user authorization information into a lighting instruction recommendation model to obtain a target lighting instruction set corresponding to the user expression information and/or the user authorization information" comprises:
determining a plurality of lighting instructions corresponding to the user expression information and/or the user authorization information as a preset lighting instruction set; inputting the user expression information and/or the user authorization information, and the preset lighting instruction set into the lighting instruction fine ranking model, to obtain a target probability value of each preset lighting instruction in the preset lighting instruction set corresponding to the user expression information and/or the user authorization information, and ranking the preset lighting instruction set according to the target probability value to obtain the target lighting instruction set; or
inputting the user expression information and/or the user authorization information into the lighting instruction fine ranking model, to obtain a lighting instruction set corresponding to the user expression information and/or the user authorization information and a probability value of each lighting instruction in the lighting instruction set, and filtering and ranking the lighting instruction set according to the probability value to obtain the target lighting instruction set.

6. The method of claim 5, wherein determining the plurality of lighting instructions corresponding to the user expression information and/or the user authorization information as the preset lighting instruction set, comprises:
traversing a preset mapping relationship of user expression information and/or user authorization information corresponding to lighting instructions, and obtaining the preset lighting instruction set composed of the plurality of lighting instructions.

7. The method of claim 2, wherein after obtaining the user expression information and/or the user authorization information, the method further comprise:
determining user attribute information corresponding to the user authorization information;
if a user is determined to be a target user according to the user attribute information, then invoking a lighting instruction determination model to process the user attribute information to obtain a target user group corresponding to the user attribute information and a target lighting instruction corresponding to the target user group;
adjusting the lighting device according to the target lighting instruction.

8. A lighting device adjustment device, applied to lighting device, wherein the device comprises:
a user information acquisition module, being used to obtain user expression information and/or user authorization information;
a lighting instruction recommendation module, being used to input the user expression information and/or the user authorization information into a lighting instruction recommendation model to obtain a target lighting instruction set corresponding to the user expression information and/or the user authorization information;
a lighting instruction selection module, being used to receive a selection instruction of a user and select a target lighting instruction from the target lighting instruction set according to the selection instruction of the user;
a lighting device adjustment module, being used to adjust the lighting device according to the target lighting instruction.

9. A lighting device, wherein the lighting device comprises a processor and a storage device, the processor is used to implement the lighting device adjustment method as described in any one of claims 1 to 7 when executing a computer program stored in the storage device.

10. A computer-readable storage medium, wherein the computer-readable storage medium is stored with a computer program, when the computer program is executed by a processor, the lighting device adjustment method as described in any one of claims 1 to 7 is implemented.
